Europäisches Patentamt

European Patent Office

Office européen des brevets

(19)

(11) **EP 0 910 742 B1**

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(21) Anmeldenummer: **98932013.0**

(22) Anmeldetag: **27.04.1998**

(51) Int Cl.⁷: **F03B 15/06**, F03B 15/16

(86) Internationale Anmeldenummer:
**PCT/DE98/01168**

(87) Internationale Veröffentlichungsnummer:
**WO 98/49445 (05.11.1998 Gazette 1998/44)**

(54) **VERFAHREN ZUR STEUERUNG VON TURBINENSYSTEMEN IN WASSERKRAFTWERKEN**

METHOD FOR CONTROLLING TURBINE SYSTEMS IN HYDROPOWER STATIONS

PROCEDE POUR LA COMMANDE DE SYSTEMES DE TURBINES DANS DES CENTRALES HYDRAULIQUES

(84) Benannte Vertragsstaaten:
**AT CH ES FR GB IT LI PT SE**

(30) Priorität: **28.04.1997 DE 19717871**

(43) Veröffentlichungstag der Anmeldung:
**28.04.1999 Patentblatt 1999/17**

(73) Patentinhaber: **Mitterfelner, Anna**
**85661 Forstinning (DE)**

(72) Erfinder: **MITTERFELNER, Otto**
**D-85661 Forstinning (DE)**

(74) Vertreter: **Thiel, Christian**
**Schneiders & Behrendt**
**Rechts- und Patentanwälte**
**Huestrasse 23**
**(Westfalenbankgebäude)**
**44787 Bochum (DE)**

(56) Entgegenhaltungen:
**EP-A- 0 435 182        EP-A- 0 644 331**
**US-A- 4 467 216        US-A- 5 322 412**

**Beschreibung**

Die Erfindung betrifft ein Verfahren zur Steuerung von Turbinensystemen in Wasserkraftwerken gemäß dem Oberbegriff des Hauptanspruchs.

In Wasserkraftwerken wird sowohl die Leistung des gesamten Systems als auch die Lastverteilung auf die einzelnen Turbinen so geregelt, daß aufgrund der vom Hersteller angegebenen Werte für das Leistungsmaximum der eingesetzten Turbinen das Leistungsmaximum des gesamten Systems eingestellt und die vorhandene Wassermenge dementsprechend auf zwei oder mehrere Turbinen verteilt wird. Das Wasserkraftwerk arbeitet bei dieser einmal vorgenommenen Einstellung oftmals Jahre, ohne Rücksicht auf die sich mit der Zeit ändernden Benutzungsbedingungen oder Anforderungen an das Turbinensystem.

Die EP 0 435 182 beschreibt ein System zur Steuerung von Turbinen in Wasserkraftwerken. Dabei wird eine vorgegebene, in einem Hauptbehälter vorhandene Wassermenge ständig kontrolliert und auf das Turbinensystem so verteilt, dass ein Maximum an Leistung für jede einzelne Turbine erreicht wird.

Der Erfindung liegt die Aufgabe zugrunde, ein kostengünstiges und einfach durchführbares Verfahren zu Steuerung eines Turbinensystems anzugeben, welches ermöglicht, daß das Wasserkraftwerk bezogen auf das Wasserangebot bei seinem Leistungsmaximum betrieben wird.

Diese Aufgabe ist durch das im Anspruch 1 angegebene Verfahren gelöst. Unteransprüche stellen vorteilhafte Weiterbildungen dar.

Danach wird eine vorhandene Wassermenge bei einem z.B. zwei Turbinen aufweisenden Turbinensystem auf die beiden Turbinen so verteilt. Dabei wird das Verhältnis der durch die beiden Turbinen durchfließenden Wassermange dadurch festgelegt, daß zunächst die Verteilung der Wassermenge zwischen den beiden Turbinen geändert wird und die sich dadurch ändernde Leistung des Turbinensystems registriert wird. Dieser Vorgeng wird so oft wiederholt, bis das Leistungsmaximum des Turbinensystems gemessen wird. Danach erfolgt die Feststellung der verteilung der Wassermengeauf beide Turbinen bei unterschiedlichen vorhandenen Wassermengen. Damit wird der Wirkungsgrad der arbeitenden Turbinen optimal ausgenutzt. Es wurde dabei erkannt, daß es nicht erforderlich ist, daß eine Turbine im Bereich ihres Leistungsmaximums arbeitet und die andere Turbine, bzw. bei einem mehrere Turbinen aufweisenden System die anderen Turbinen, dem maximalen Wirkungsgrad der ersten Turbine angepasst wird bzw. werden. Vielmehr ist es wesentlich, daß das Turbinensystem einen optimalen Wirkungsgrad aufweist und daß die dabei durch die einzelnen Turbinen durchfließenden Wassermengen ermittelt werden. Mit anderen Worten, es ist wesentlich, daß die beiden Turbinen bei einer derart optimalen Auslastung arbeiten, daß das Turbinensystem ein Leistungsmaximum erreicht, obwohl ev. keine der Turbinen bei ihrem Leistungsmaximum arbeitet. Das Verfahren kann auch bei doppelt geregelten Kaplanturbinen angewendet werden, bei denen die Lage von Lauf- zu Leitapparat ermittelt wird. Dabei wird die zugehörige Leistung gemessen, so daß die optimalen Stellungen des Lauf- und Leitapparates gefunden werden können. Ebenso eignet sich das Verfahren für Pelton-Turbinen mit zwei oder mehr Düsen.

Das Verfahren eignet sich insbesondere zu kontinuierlichen Steuerung von Turbinensystemen, indem die Meßwerte kontinuierlich aufgenommen werden und zur kontinuierlichen Steuerung der Lastverteilung der beiden Turbinen eingesetzt weden, so daß erreicht werden kann, daß das Turbinensystem immer bei Leistungsmaximum arbeitet.

Eine Anlage zur Durchführung des Verfahrens weist folgende Einheiten auf: eine Aufnahmeeinheit, eine Registriereinheit und eine Einheit zu Steuerung der ermittelten Wassermengen und zu entsprechenden Zuleitung derselben zu den beiden Turbinen. Die Aufnahmeeinheit liefert einen der Position von Leit- bzw. Laufapparat proportionalen Wert, z.B. 0...20mA entsprechend 0...100% Öffnung. Die Registriereinheit wandelt diese Werte in digitale Signale um. Die Registriereinheit besteht in der Regel aus einem handelsüblichen PC. Die Ausgabeeinheit wird von dem oben genannten PC angesteuert und liefert ein Signal zum Öffnen bzw. Schließen der Turbine(n). Sie wird durch einen Digital/Analogwandler oder durch Relais gebildet.

Die Steuerung des Turbinensystems kann mit dem erfindungsgemäßen Verfahren kontinuierlich erfolgen, d.h., die notwendigen Daten (Leistung, Position Leit-/Laufapparat) können kontinuierlich ermittelt und registriert werden und das Turbinensystem kann kontinuierlich in Abhängigkeit von diesen Daten gesteuert werden.

Durch diese Art der Steuerung des Gesamtsystems und eine kontinuierliche Überprüfung desselben durch das beschriebene Verfahren ist es möglich, daß Systemänderungen, wie z.B. Änderungen der Geometrie des Wasserkraftwerkes, Änderungen in der Auslastung der Turbinen u.s.w. ständig erfaßt werden können und der Wirkungsgrad der einzelnen Turbinen dem Leistungsmaximum des Systems stets angepaßt werden kann. Bei Änderung der Leistung eines Wasserkraftwerks kann mit dem erfindungsgemäßen Verfahren die Auslastung der einzelnen Turbinen schnell und einfach bestimmt werden. Eine Einstellung des Systems auf neue, vorhandene Wassermengen ist mit dem Verfahren schnell erreichbar. Stark schwankende vorhandene Wassermengen ergeben normalerweise schwankende Leistungswerte und bedürfen deshalb einer schnellen und genauen Regelung. Das Verfahren eignet sich auch zur Ermittlung der Lastverteilung bei zwei gleichen, jedoch unterschiedliche Geometrien aufweisenden Turbinen. Bei einer

Erweiterung eines Systems, z.B. von drei mit 70MW Leistung arbeitenden Turbinen auf ein System mit vier Turbinen, das jedoch 250MW Leistung abgeben soll, wird eine vierte Turbine dazugeschaltet. Jedoch wird sie nicht mit 40MW Leistung betrieben, sondern es werden alle vier Turbinen aufeinander neu abgestimmt, indem die für jede Turbine optimale Wassermenge/Last neu bestimmt wird.

Das erfindungsgemäße Verfahren wird anhand der nachfolgenden Figuren und des Beispiels 1 näher erläutert. Es zeigen:

Fig.1 Leistung - Last/Wassermenge Diagramm für ein zwei Turbinensystem.

Fig.2 Zuordnung Leit- und Laufapparat bei doppelt geregelten Kaplanturbinen.

Fig.3 Darstellung eines Regelvorganges unter Verwendung der Zuordnung der Fig.2.

Beispiel 1: Darstellung eines Optimierungsvorganges bei doppelt geregelten Kaplanturbinen:

Eingangsgröße: Position von Leitapparat 1 (0 bis 100%) Leistung kW (0 bis 100%)

Ausgangsgröße: Korrekturposition für Leitapparat 2 (-10 bis +10%)

Das Verfahren wird für jedes Wasssermengenangebot durchgeführt und in Form einer Tabelle (0 bis 100) ausgewertet. Dabei wird die Position von Leitapparat als Index verwendet. Der Optimierungsvorgang läuft dabei nach folgendem Verfahren ab:

1. Wartezeit von z.B. 10 Minuten um einen stabilen Zustand des Laufapparates herzustellen. Wenn in dieser Wartezeit der Leitapparat um mehr als 1% verstellt wird, so wird die Wartezeit neu gestartet.

2. Messung der aktuellen Leistung. Bei der erstmaligen Mes sung für die jeweilige Position von Leitapparat 1 wird die Leistung in einer Tabelle gespeichert, um eine spätere Verbesserung des Wirkungsgrades bewerten zu können.

3. Verstellung von Leitapparat um eine Korrekturgröße, z.B. +2%.

4. Wartezeit 2, z.B. 30 Minuten, um eine stabilen Zustand herzustellen. Wenn in dieser Wartezeit der Leitapparat 1 um mehr als z.B. 1% verstellt wird, so wird die Wartezeit neu gestartet.

5. Messung der aktuellen Leistung. Ist die aktuelle Leistung besser als der alte Wert (bezogen auf die Position von Leitapparat 1), so wird die Korrekturgröße übernommen und in der entsprechenden Tabelle gespeichert.

Um Fehlmessungen zu eliminieren, wird dabei nur der Mittelwert aus der alten Messung und der aktuelllen Messung berechnet:

$$P(neu) = P(alt) + P(neu)/2.$$

An der aktuellen Position der Tabelle wird außerdem ver merkt, daß bei dem nächsten Optimierungsvorgang die Kor rekturgröße -2% verwendet werden soll, also ein Optimie rungsversuch in die andere Richtung versucht werden soll.

Die benachbarten Werte in der Tabelle werden geglättet, indem - ausgehend von der aktuellen Position - der Mittelwert zwischen zwei benachbarten Leistungswerten gebildet wird:

$$P(akt) = P (akt+1) + P (akt) /2.$$

Ist die aktuelle Leistung schlechter als der alte Wert, so wird die Anzahl der negativen Versuche in der Tabelle hochgezählt. Haben sich mehr als z.B. fünf negative Versuche in Folge ereignet, so wird ein Optimierungsversuch für die aktuelle Position nicht mehr durchgeführt, da das Optimum gefunden ist.

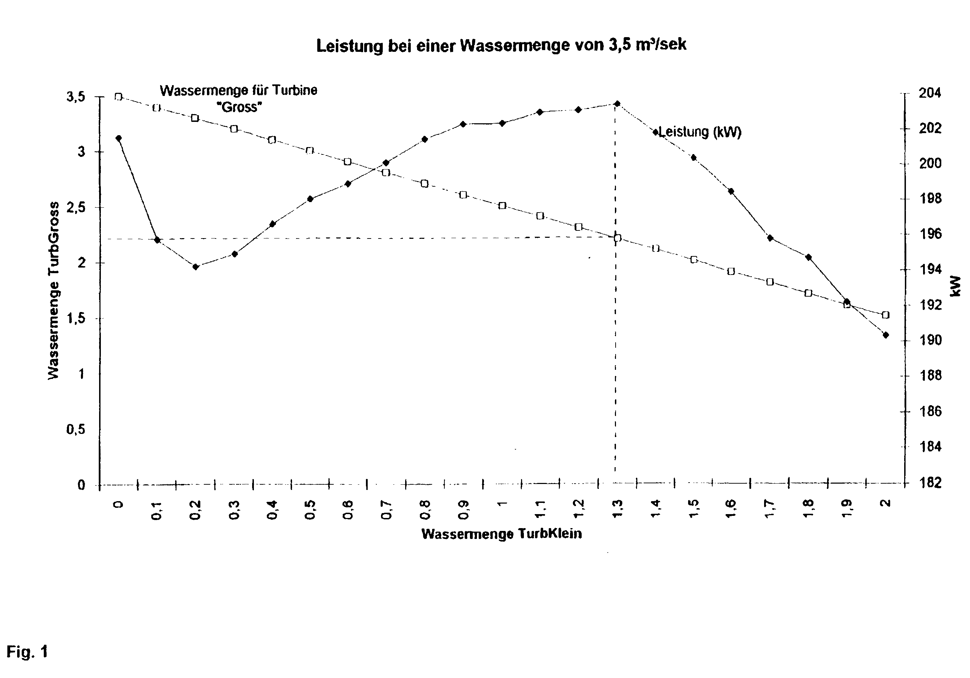

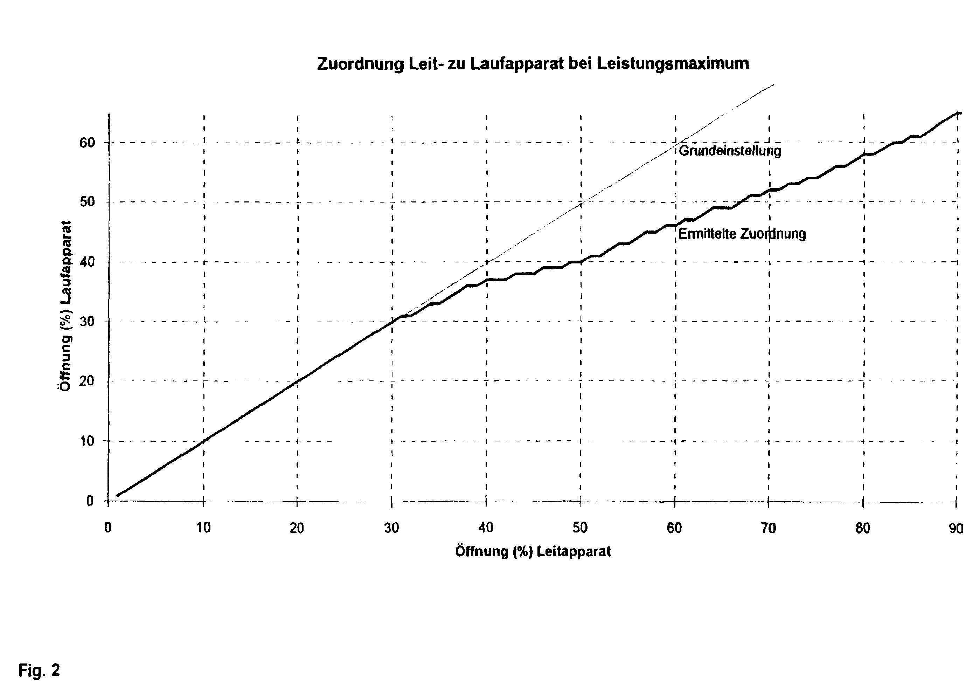

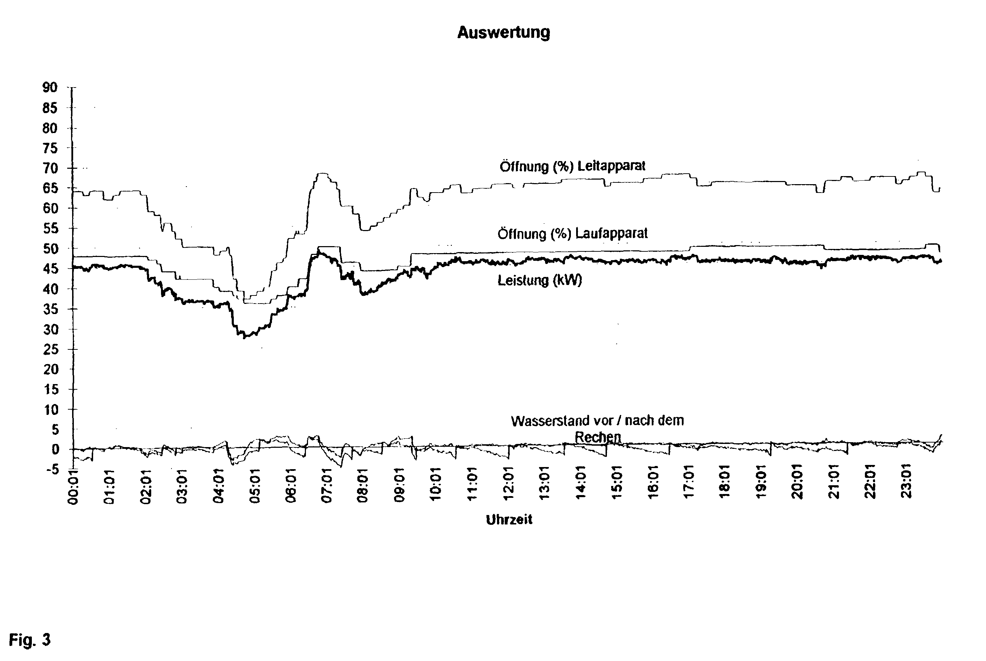

Wie aus Fig.1 entnehmbar ist, tritt das Leistungsmaximum eines Zwei-Turbinen Systems bei einer vorgegebenen vorhandenen Wassemenge von 3,5 $m^3$ dann auf, wenn durch die große Turbine eine Wassemenge von 2,2 $m^3$ und durch die kleine Turbine eine Wassermenge von 1,3 $m^3$ durchfließt. Das Arbeiten mit anderem Wassermengenverhältnis, auch wenn das Leistungsmaximm z.B. der großen Turbine erreicht ist, gewähreistet nicht, daß das Turbinensystem mit einem maximalen Wirkungsgrad arbeitet. Wie in Fig.2 dargestellt ist, wird ein Optimum für ein System von doppelt geregelten Kaplanturbinen so gefunden, daß die Leistung bei unterschiedlichen Wassermengenverhältnissen gemessen wird und die besten Werte abgespeichert werden. Für Darstellung der Fig.2 ergibt sich der optimale Wirkungsgrad bei 60% Öffnung Leitapparat und 47% Öffnung Laufapparat. Mit diesem Verfahren konnte eine bis zu 10% Verbesserung der Leistung gegenüber der herkömmlichen Einstellung (Grundeinstellung) erreicht werden. Voraussetzung für die Optimierung der Leistung ist, daß alle Messwerte in einer Registriereinheit, z.B. einem PC in möglichst geringen Zeitintervallen abgespeichert werden. Ein Zeitintervall von 1 min hat sich als günstig erwiesen. Eine automatische Auswertung der Werte ist ebenfalls möglich. Ein Ergebnis einer derartigen Regelung ist in Fig.3 dargestellt. Es ist erkennbar, daß bei einer schwankenden vorhandenen Wassermenge der Wasserstand mit Hilfe des Leitapparates weitgehend konstant gehalten wird. Der Laufapparat folgt der Position des Leitapparates entsprechend der ermittelten Kurve laut Fig.2. Damit ist gewährleistet, daß auch bei schwankender Wassermenge immer die Einstellung mit dem maximalen Wirkungsgrad gewählt wird.

## Patentansprüche

1. Verfahren zur Steuerung von Turbinensystemen in Wasserkraftwerken bei dem eine vorgegebene Wassermenge auf zwei Turbinen verteilt wird, dadurch gekennzeichnet, daß die Festlegung des Verhältnisses der durch die beiden Turbinen Durchfließenden Wassermenge folgende schritte aufweist:

   - Änderung der Verteilung der Wassermenge zwischen den beiden Turbinen und Registrierung der sich dadurch ändernden Leistung des Turbinensystems;
   - Wiederholung dieses Vorganges sooft bis das Leistungsmaximum des Turbinensystems gemessen wird;
   - Ermittlung der Verteilung der vorgegebenen Wassemenge auf beide Turbinen bei unterschiedlichen vorhandenen Wassermengen.

2. Verfahren zur Steuerung von Turbinensystemen in Wasserkraftwerken bei dem die vorgegebene Wassermenge auf mindestens drei Turbinen verteilt wird, dadurch gekennzeichnet, daß zunächst die optimale Zuordnung der ersten zwei Turbinen zueinander nach dem Verfahren nach Anspruch 1 ermittelt wird, und daß dann die dritte und jede nächste Turbine den als System arbeitenden vorangegengenen Turbinen nach dem Verfahren nach Anspruch 1 zugeordnet wird.

3. Verfahren nach einem der Ansprüche 1 oder 2, dadurch gekennzeichnet, daß die eingesetzten Turbinen doppeltgeregelte Kaplanturbinen, Pelton Turbinen mit zwei oder mehr Düsen oder Turbinen mit zwei Kammern sind.

4. Verfahren nach Anspruch 3, dadurch gekennzeichnet, daß die Stellung Lauf- zu Leitapparat ermittelt wird.

5. Verfahren nach einem der vorangegangenen Ansprüche, dadurch gekennzeichnet, dass es zur kontinuierlichen Steuerung eines Wasserturbinensystems eingesetzt wird.

## Claims

1. A method for controlling turbine systems in hydropower stations in that a pre-determined amount of water is distributed through two turbines, characterized in that the determination of the proportion of the amount of water that flows through both turbines has the following steps:

   a) the change in the distribution of the amount of water through both turbines and registration of the change in performance of the turbine system

   b) repeating this step until the maximum performance of the turbine system is measured

   c) determining the distribution of the pre-determined water amount in both turbines with different existing amounts of water.

2. A method for controlling turbine systems in hydropower stations in that a pre-determined amount of water is distributed over at least three turbines, characterized in that first the optimal relation of the first two turbines to each other is determined as described in claim 1 and that the third and each following turbine will be related to the previous turbines which work as a system as described in the method of claim 1.

3. The method of claim 1 or 2, characterized in that the turbines are double regulated Kaplan turbines, Pelton turbines with two or more jet turbines or with two chambers.

4. The method of claim 3 characterized in that the position of run to lead machine will be determined.

5. The method of any of the above mentioned claims, characterized in that the water turbine system is constantly controlled.

## Revendications

1. Procédé pour la commande de systèmes de turbines dans des centrales hydrauliques, selon lequel un volume d'eau pré-établi est réparti sur deux turbines, caractérisé en ce que la fixation de la proportion du volume d'eau circulant à travers les deux turbines comprend les étapes suivantes:

   - modification de la répartition du volume d'eau entre les deux turbines et enregistrement de la puissance, se modifiant suite à cela, du système de turbines;
   - répétition de cette opération aussi souvent que nécessaire, jusqu'à ce que le maximum de puissance du système de turbines soit mesuré;
   - détermination de la répartition du volume d'eau pré-établi sur les deux turbines pour des volumes d'eau effectifs différents.

2. Procédé pour la commande de systèmes de turbines dans des centrales hydrauliques, selon lequel le volume d'eau pré-établi est réparti sur au moins trois turbines, caractérisé en ce que la coordination mutuelle optimale des deux premières turbines est tout d'abord déterminée selon le procédé conforme à la revendication 1, et en ce que la troisième turbine ainsi que chacune des turbines suivantes sont ensuite coordonnées respectivement avec les turbines précédentes, fonctionnant en un système, selon le procédé conforme à la revendication 1.

3. Procédé selon l'une des revendications 1 ou 2, caractérisé en ce que les turbines employées sont des turbines Kaplan à double réglage, des turbines Pelton à deux ou plus de deux injecteurs ou des turbines à deux chambres.

4. Procédé selon la revendication 3, caractérisé en ce que le positionnement du dispositif tournant par rapport au distributeur est déterminé.

5. Procédé selon l'une des revendications précédentes, caractérisé en ce qu'il est mis en oeuvre pour la commande continue de système de turbines hydrauliques.

**Leistung bei einer Wassermenge von 3,5 m³/sek**

Fig. 1

EP 0 910 742 B1

## Zuordnung Leit- zu Laufapparat bei Leistungsmaximum

Grundeinstellung

Ermittelte Zuordnung

Öffnung (%) Laufapparat

Öffnung (%) Leitapparat

Fig. 2

EP 0 910 742 B1

**Auswertung**

Fig. 3

EP 0 910 742 B1

8